# EUROPEAN PATENT SPECIFICATION

(11) **EP 0 937 641 B1**
(45) Date of publication and mention of the grant of the patent: **07.07.2004**
(21) Application number: 98500280.7
(22) Date of filing: 28.12.1998
(51) Int. Cl.: B64C 9/30, B64C 9/18, B64C 9/10, B64C 3/50

(54) **Flight controls with automatique balance**
Flugzeugsteuerungseinrichtungen mit automatischer Kompensation
Surfaces de commande avec compensation automatique

(30) Priority: 14.01.1998 ES 9800050
(43) Date of publication of application: 25.08.1999
(73) Proprietor: Munoz Saiz, Manuel, 04004 Almeria (ES)
(72) Inventor: Munoz Saiz, Manuel, 04004 Almeria (ES)

(56) References cited:
- US-A- 1 413 258
- US-A- 5 335 886

## Description

TECHNICAL FIELD.- This invention relates to a flight control system for use in an aircraft which compensates aerodinamically the amount of deflexion requiered to provide such a control in response to the variations in airspeed or fluid pressure.

BACKGROUND ART.- Aircraft flight controls take the form of primary and secondary surfaces which are hinged to the trailing or aft portion of directional, horizontal stabilizer members and wings on the aircraft, such members may include ailerons, elevators, rudders and flaps. The orientation of these flight controls is changed by means of an hydraulic, pneumatic or electric system which are operated by the pilot o autopilot, by means of one or two actuators but in most of these systems are used two one piece ailerons or surfaces, one operates always and the other only acts at low speed or otherwise their extension is changed as a function of the airspeed, it is reduced as the airspeed increases, other like flaps are acted manually by steps or stages, in all cases the deflexion is increased as the airspeed decreases.

DESCRIPTION OF THE INVENTION.- Flight controls with automatic balance that consist of flight control surfaces which rotate by means of at least one actuator, each surface being formed by first and second parts, characterised in that the second part is flexible and is attached integrally to the first part, whereby at low speeds the flight control surface adopts the shape of a conventional flight control surface with both parts rotating in their entirety as if a single part, and at high speeds the second part rotates with reference to the first part as a function of the air speed pressure, opposing to the rotation of the first part due its flexible feature.

The flexible type of aileron is of variable cross-section, tapering to the trailing edge so that its deflection by the dynamic effect of the air varies along its surface inversely to its cross-section.

The mechanical resistance of springs as required are exponential but they may be linear or other desired, operating throughout the movement or only in a low or high-speed zone.

The ailerons may be hollow or compacted, of variable cross-section, tapering toward the trailing edge. Both have an aerodynamic profile.

With hollow ailerons, hot air is made to flow through them to heat them, emerging through holes; they may also have flexible ribs or internal bands and they can be opened at the trailing edge.

If it is a flap, at high speed, because of dynamic air pressure they retract completely, so that, together with the wing, they form an aerodynamic profile, they do not need actuators, similarly they are extended at low speed, and retracted at high speed.

The flap size, whether of one or more elements, provides a large surface, to allow for greater lift without the need for leading edge flaps.

Using rotating flaps around a tubular shaft, this is connected by means of a cardan to the shaft of the symmetrical flap to avoid asymmetry.

As the bands or strips take part of the aileron surfaces they provide a safe performance.

An additional over-center spring can hold fix the aileron.

Provided that this system acts automatically and with the use of only some flexible elements, some devices and controls used to control the secondary or low speed surfaces are avoided. It is safe, simple and economical.

### BRIEF DESCRIPTION OF THE DRAWINGS.

Figure 1, shows a partial, side and schematic cross-section view of the device in the invention with a rudder, elevator or aileron.
Figure 2 shows a partial and schematic, cross-section view of a flexible elevator or aileron, that have pieces of aileron surfaces joined by springs that provide its flexibility.
Figure 3 to 7 show lateral, schematic cross-section views of wings with different flexible flaps. An over-center spring can hold fix the flexible part of the aileron.
Figure 8 and 9 show partial, side, schematic, cross-section views of the stabilizers or wings with their rudders, elevators or ailerons.

### MORE DETAIL DESCRIPTION OF THE DRAWINGS

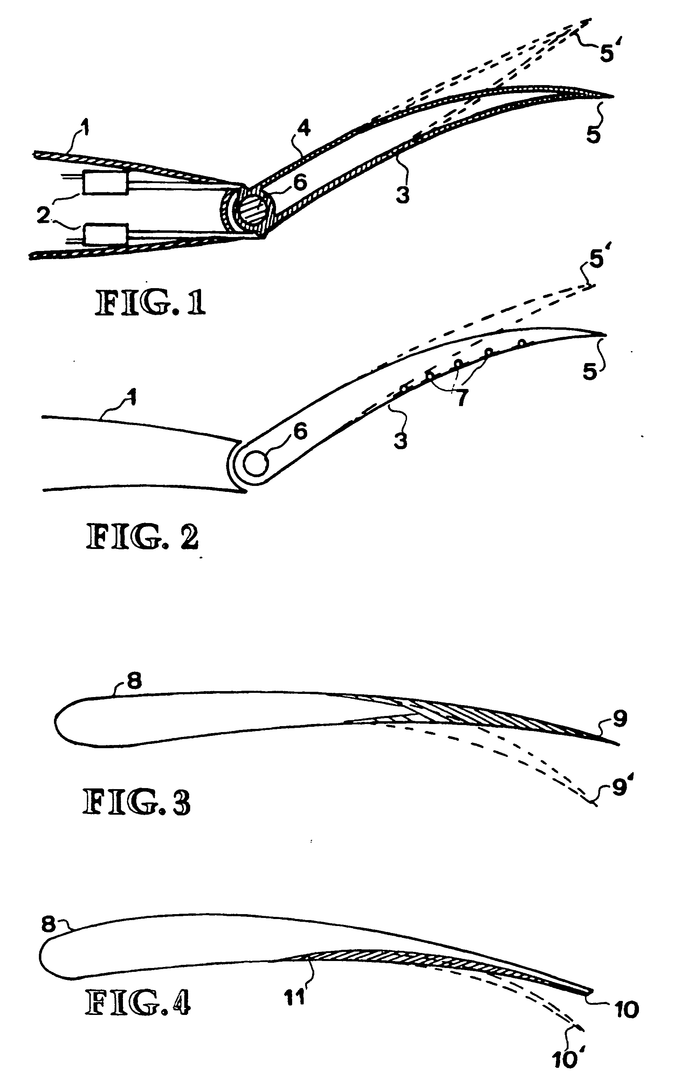

Figure 1 consists of the vertical, horizontal stabilizer or wing 1, the hydraulic actuators 2, the flexible rudder, elevator or aileron 3, the rigid, main part of the aileron, rudder or elevator 4, the flexible part of the ailerons at high-speed 5 and at low-speed 5', and the rotatory shaft 6.
Figure 2 consists of the horizontal stabilizer or wing 6, the flexible elevator or aileron 3, the secondary and flexible part of the aileron at high speed 5 and at low speed 5' and the springs 7.
Figure 3 consists of the wing 8, the flexible, thin and compacte flap at high-speed 9 and at low-speed 9'.

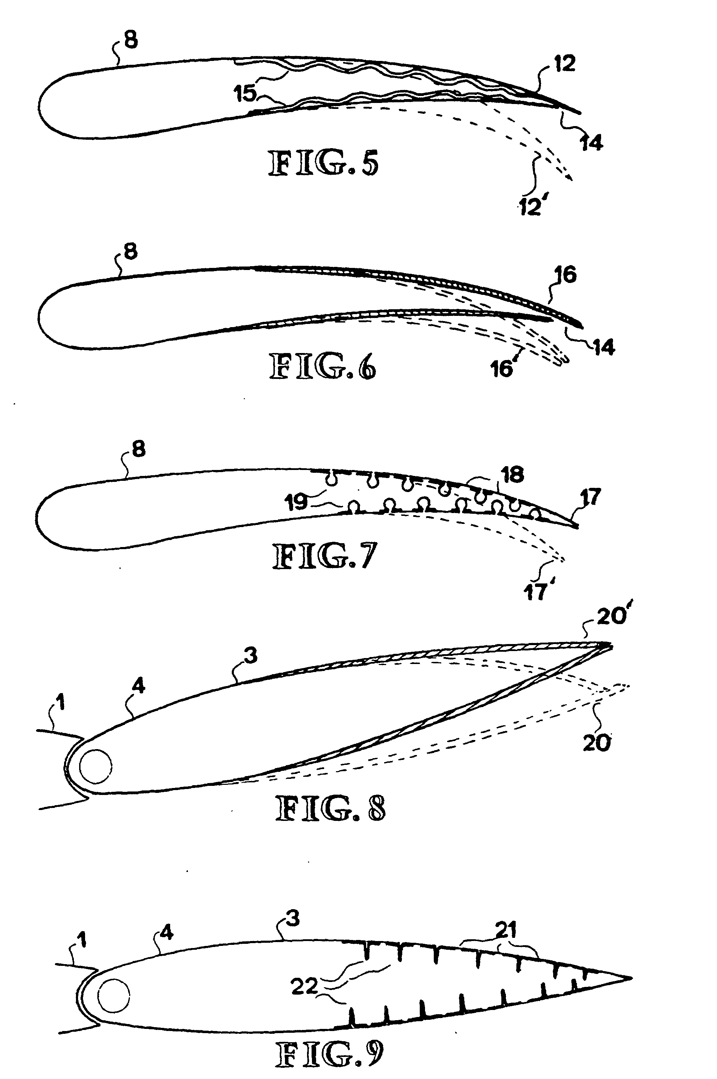

Figure 4 consists of the wing 8, the flexible lower surface flap at high-speed 10 and at low-speed 10' and the attachement zone of the flap to the wing.
Figure 5 consists of the wing 8, the flexible flap at high-speed 12 and at low-speed 12', opened at its trailing edge 14 and the wavy strips 15, attached at the inside of the lower and upper surfaces that form the flap.
Figure 6 consists of the wing 8, the flexible flap at high-speed 16 and at low-speed 16', opened at its trailing edge 14 and formed by flexible plates that shapes the flap and produce its flexibility.
Figure 7 consists of the wing, the flexible flap at high-speed 17 and at low speed 17', formed by a plurality of plates 18 joined by the springs 19, that shapes the flap and produce its flexibility.
Figure 8 consists of the stabilizer or wing 1, the flexible rudder, elevator or aileron 3, the main rigid part of the rudder or aileron 4, the flexible part of the rudder or aileron at high-speed 20', and at low-speed 20, opened at its trealing edge and formed by flexibles plates which shape the rudder or aileron and produce its flexibility.
Figure 9 consists of the stabilizer or wing 1, the flexible rudder, elevator or aileron 3, the main rigid part of the rudder or aileron 4, the flexible part of the rudder or aileron formed by a plurality of plates 21 joined by the strips 22, which form the rudder or aileron and produce its flexibility.

## Claims

1. Flight controls with automatic balance that consists of flight control surfaces (3) which rotate by means of at least one actuator (2), each surface formed by first (4) and second parts, **characterized in that** the second part (5, 5) is flexible and is attached integrally to the first part (4), whereby at low speeds (5') the flight control surface adopts the shape of a conventional flight control surface with both pacts rotating in their entirety as if a single part, and at high speeds (5) the second part rotates with reference to the first part as a function of the air speed pressure, opposing to the rotation of the first part due to its flexible feature.

## Patentansprüche

1. Flugzeugsteuerungseinrichtungen mit automatischer Kompensation, die von Flugsteuerungsflächen (3) gebildet werden, welche durch mindestens einen Antrieb (2) gedreht werden, wobei jede Fläche aus einem ersten Abschnitt (4) und einem zweiten Abschnitt besteht, **dadurch gekennzeichnet, dass** der zweite Abschnitt (5, 5') flexibel und insgesamt mit dem ersten Abschnitt (4) verbunden ist, wodurch die Steuerungsfläche bei geringer Geschwindigkeit (5') die Form einer üblichen Steuerungsfläche annimmt, bei der sich die beiden Abschnitte vollständig wie ein einziges Teil drehen, während sich der zweite Abschnitt bei hoher Geschwindigkeit gegenüber dem ersten Abschnitt in Abhängigkeit vom Druck der Luftgeschwindigkeit dreht und der Rotation des ersten Abschnitts auf Grund seiner flexiblen Merkmale (5) Widerstand leistet.

## Revendications

1. Commandes de vol avec compensation automatique qui consistent en des surfaces de contrôle de vol (3), qui tournent au moyen d'un actionneur (2) au moins, chaque surface étant formée d'une première (4) et d'une deuxième section, **caractérisées en ce que** la deuxième section (5, 5') est flexible et raccordée intégralement à la première section (4), et par conséquent, à petites vitesses (5') la surface de contrôle prend la forme d'une surface de contrôle conventionnelle où les deux sections tournent complètement comme une pièce unique, et à grandes vitesses (5) la deuxième section tourne par rapport à la première section en fonction de la pression de la vitesse de l'air, en s'opposant à la rotation de la première partie du fait de sa caractéristique flexible.
